# FASCICULE DE BREVET EUROPEEN

(11) **EP 1 066 585 B1**
(45) Date de publication et mention de la délivrance du brevet: **16.01.2002**
(21) Numéro de dépôt: 99907707.6
(22) Date de dépôt: 15.03.1999
(51) Int. Cl.: G06K 7/08, G06K 7/10, G06K 7/00

(54) **PROCEDE D'ECRITURE SIMULTANEE D'UN MESSAGE COMMUN DANS DES ETIQUETTES ELECTRONIQUES SANS CONTACT**
VERFAHREN ZUM SIMULTANEN SCHREIBEN EINER GEMEINSCHAFTLICHEN NACHRICHT IN KONTAKTLOSEN ETIKETTEN
METHOD FOR WRITING A COMMON MESSAGE IN CONTACTLESS ELECTRONIC LABELS

(30) Priorité: 27.03.1998 FR 9803833
(43) Date de publication de la demande: 10.01.2001
(73) Titulaire: Gemplus, 13881 Gémenos Cedex (FR)
(72) Inventeur: KALINOWSKI, Richard, F-13470 Carnoux-en-Provence (FR); HUBNER, Michel, Chemin Puget, Terrein, 13600 La Ciotat (FR)
(86) Numéro de dépôt international: FR9900571
(87) Numéro de publication internationale: WO9950781

(56) Documents cités:
- EP-A- 0 702 323
- EP-A- 0 777 192
- US-A- 5 434 572

## Description

L'invention concerne le domaine des étiquettes électroniques du type lecture/écriture qui sont utilisées pour identifier des produits et, plus particulièrement, un procédé pour écrire ou enregistrer, simultanément sur plusieurs étiquettes électroniques, un message commun.

Il est connu d'utiliser des "codes barre" pour identifier des produits en indiquant dans ce code barre un certain nombre d'informations telles que le nom du fabricant et le type de produit. La lecture de ce code barre lors du passage à la caisse permet, par l'intermédiaire d'un système informatique, de connaître automatiquement le prix du produit.

De tels codes barres présentent l'inconvénient d'avoir un rôle permanent passif, en ce sens, qu'ils ne peuvent être que lus l'un après l'autre.

Aussi, on utilise de plus en plus des étiquettes dites électroniques qui contiennent des circuits électroniques permettant, d'une part, d'enregistrer des informations similaires à celles des codes barres et, d'autre part, de réaliser des fonctions particulières, le tout en relation avec un dispositif de lecture/écriture.

Dans certaines applications, ces étiquettes électroniques sont lues et/ou enregistrées par un dispositif qui émet un champ électromagnétique modulé de fréquence porteuse F₀ qui, détecté et démodulé par l'étiquette électronique, fournit à cette dernière l'énergie pour alimenter les circuits électroniques ainsi que des instructions pour réaliser telle ou telle fonction.

Les fonctions qui peuvent être réalisées sont, par exemple, la lecture de tout ou partie des informations enregistrées au choix de l'opérateur, la modification de certaines des informations enregistrées, l'inhibition totale ou partielle, temporaire ou définitive, de l'étiquette pour mettre en oeuvre des systèmes anti-fraude ou anti-vol, l'identification de chacune des étiquettes électroniques qui sont dans le champ électromagnétique émis par le dispositif de lecture/écriture, etc...

Lorsque chacune des étiquettes électroniques situées dans le champ électromagnétique du dispositif de lecture/écriture a été identifiée, il est possible de dialoguer séparément avec chaque étiquette en utilisant le code qui identifie l'étiquette dans ce champ. Une telle manière de dialoguer n'est pas efficace lorsque le même message doit être reçu et enregistré par un grand nombre d'étiquettes. Il en est ainsi, notamment au moment de la programmation et de l'enregistrement de l'étiquette à la fin de l'emballage du produit sur lequel l'étiquette est collée.

Par ailleurs, les étiquettes destinées aux produits de grande diffusion ont souvent un fonctionnement par défaut en lecture par messages séparés par des périodes de silence ou pauses de durées fixes ou aléatoires. Il en découle une impossibilité de communication simultanée du lecteur sur plusieurs étiquettes dans la mesure où, d'une part, les étiquettes ne peuvent pas être à l'écoute du lecteur pendant leur phase d'émission et, d'autre part, ces mêmes étiquettes n'ont aucune raison d'être en fonctionnement synchrone ce qui est la première condition qui permette l'écriture simultanée dans plusieurs étiquettes d'un message commun.

Le brevet EP-A-0702323 décrit une méthode pour sélectionner un groupe d'étiquettes électroniques en envoyant une signal à partir d'un émetteur. Dans cette méthode, on cherche à mettre les étiquettes dans un état d'émission pour faire de l'interrogation. Dans le brevet EP-A-0777192, un procédé d'interrogation à distance de carte électroniques par une station est décrit. Ce procédé comprend une étape de synchronisation (mise en phase) préalablement à l'émission de réponses par les étiquettes. Cette mise en phase des étiquettes comprend l'émission par la station d'une commande de synchronisation. Ce procédé se propose de résoudre les problèmes d'interférences destructrices des réponses envoyées par les étiquettes, justement en provoquant une collision par la mise en phase des réponses et par leur contrôle.

Le but de la présente invention est de mettre en oeuvre un procédé qui permette l'écriture simultanée d'un message commun dans des étiquettes sans contact. Ce but est atteint en déterminant un instant reconnu par toutes les étiquettes électroniques se présentant dans le champ électromagnétique du dispositif de lecture/écriture et qui sera défini comme un instant commun de synchronisation. Cet instant commun sera suivi d'abord d'un premier message permettant la sélection à l'écriture de certaines étiquettes électroniques à l'aide d'un code identificateur, puis d'un deuxième message permettant de réaliser l'écriture du message dans l'étiquette.

Plus précisément, l'invention concerne un procédé d'écriture simultanée d'un message commun dans des étiquettes électroniques sans contact à l'aide d'un dispositif de lecture/écriture émettant un champ électromagnétique modulé de fréquence porteuse (F₀) qui est détecté et démodulé par les étiquettes électroniques situées dans le champ électromagnétique, caractérisé en ce qu'il comprend les étapes suivantes consistant à :
(a) émettre, par le dispositif de lecture/écriture, un signal de remise à zéro (RAZ) pour provoquer le fonctionnement en réception des étiquettes électroniques,
(b) émettre, par le dispositif de lecture/écriture, des signaux de synchronisation pour permettre aux étiquettes électroniques de se synchroniser sur les signaux émis,
(c) émettre, par le dispositif de lecture/écriture, un code identifiant les étiquettes électroniques à sélectionner pour l'écriture simultanée,
(d) comparer, dans les étiquettes électroniques, ce code identificateur au code correspondant contenu dans la mémoire de l'étiquette électronique,
(e) mettre les étiquettes électroniques contenant ce code identificateur dans un état permettant l'écriture dans la mémoire,
(f) émettre, par le dispositif de lecture/écriture, une commande d'écriture d'un message déterminé,
(g) écrire le message déterminé dans les étiquettes électroniques sélectionnées par les étapes (d) et (e).

D'autres caractéristiques et avantages de la présente invention apparaîtront à la lecture de la description suivante d'un exemple particulier de réalisation, ladite description étant faite en relation avec le dossier joint dans lequel :
- la figure 1 est un schéma fonctionnel très simplifié des circuits électroniques constituant une étiquette électronique et un dispositif de lecture/écriture auxquels s'applique le procédé de l'invention, et
- la figure 2 est un diagramme montrant la succession d'opérations ou étapes du procédé selon l'invention.

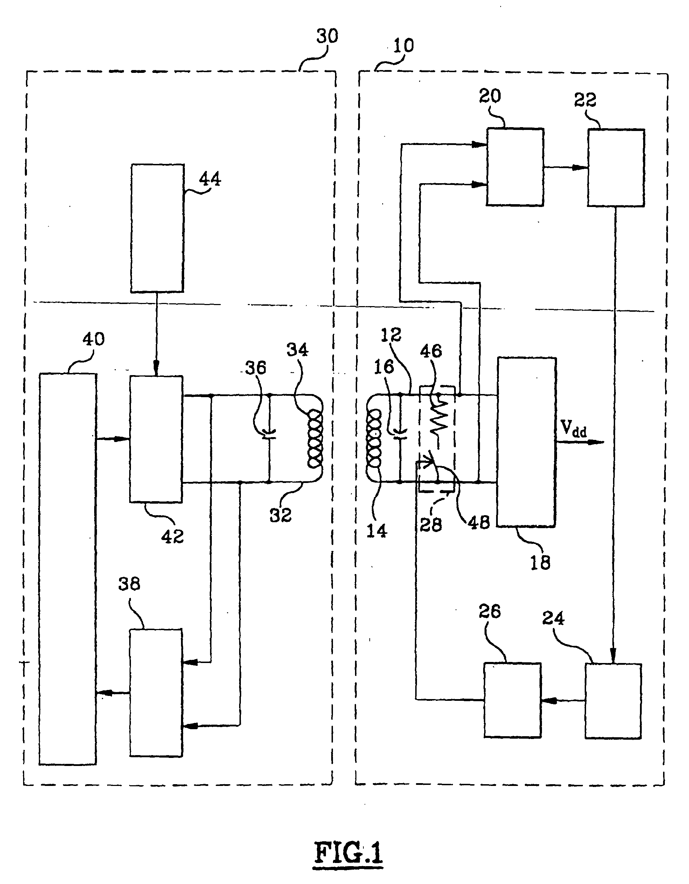

Sur la figure 1, une étiquette électronique 10 comprend, schématiquement, une antenne 12 sous la forme d'un circuit accordé à la fréquence F₀ consistant en un enroulement inductif 14 et un condensateur d'accord 16. Le circuit accordé est connecté à un circuit de redressement et filtrage 18 dont la tension de sortie Vdd sert de tension d'alimentation des différents circuits électroniques de l'étiquette électronique. Succinctement, ces différents circuits électroniques comprennent :
- un circuit de détection, de démodulation et d'interprétation 20 des signaux détectés par l'antenne 12,
- une mémoire 22 qui contient, sous forme numérique, des informations relatives au produit auquel l'étiquette est associée,
- un générateur de messages 24 qui fournit des signaux en réponse aux signaux fournis par le circuit et du contenu de la mémoire 22, et
- un modulateur 26, 28 de charge d'antenne qui module le signal reçu à la fréquence porteuse F₀ par les messages élaborés par le générateur 24. La partie 28 du modulateur comprend une résistance 46 et un interrupteur 48 en parallèle sur le circuit accordé.

Les signaux détectés par l'antenne 12 sont émis par un dispositif de lecture/écriture 30 qui comprend schématiquement, une antenne 32 sous la forme d'un circuit accordé à la fréquence F₀ consistant en un enroulement inductif 34 et un condensateur d'accord 36.

Le circuit accordé est connecté, d'une part, à un modulateur 42 du signal à la fréquence F₀ et, d'autre part, à un démodulateur 38 qui détecte les signaux résultant de la modulation introduite par le modulateur 26 de l'étiquette électronique.

Les signaux de modulation qui sont appliqués au modulateur 42 sont fournis par un microprocesseur 40 qui interprète par ailleurs les signaux démodulés fournis par le démodulateur 38. Un oscillateur 44 à la fréquence F₀ fournit au modulateur 42 le signal à la fréquence porteuse F₀ qui est à moduler.

Les messages entre le dispositif de lecture/écriture 30 et la carte électronique 10 sont échangés selon des protocoles normalisés.

Dans le cadre de ces protocoles normalisés, l'invention propose un procédé pour effectuer une écriture simultanée d'un message identique dans plusieurs étiquettes électroniques qui ont été préalablement sélectionnées.

Ce procédé consiste essentiellement à faire précéder l'envoi par le dispositif de lecture/écriture, de la commande ou instruction d'écriture de type classique d'un message permettant la sélection à l'écriture de certaines étiquettes électroniques répertoriées par un code identificateur correspondant à une partie du code contenu dans la mémoire 22.

En outre, le procédé de l'invention prévoit, préalablement au message de sélection, l'émission d'un signal à toutes les étiquettes électroniques du champ pour provoquer leur fonctionnement en réception uniquement.

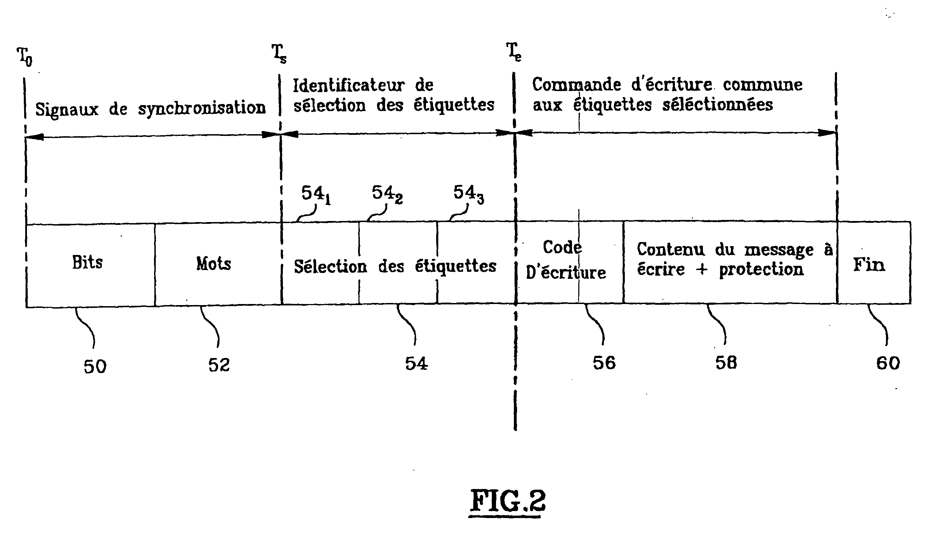

Comme le montre le diagramme de la figure 2, le procédé selon l'invention comprend les étapes suivantes consistant à :
(a) émettre à l'instant T₀ par le dispositif de lecture/écriture 30, un signal pour remettre à zéro toutes les étiquettes 10. Un tel signal RAZ est généré par chaque étiquette électronique 10, soit à l'entrée de l'étiquette dans le ohamp électromagnétique, soit par interruption momentanée de ce champ électromagnétique. Ce signal RAZ provoque le fonctionnement en réception des étiquettes électroniques.
(b) Emettre, après l'instant T₀, par le dispositif de lecture/écriture, des signaux de synchronisation 50 et 52, les premiers 50 servent à définir la fréquence des chiffres ou bits du message et les seconds 52 servent à définir la durée de chaque octet ou mot du message. Le dernier octet qui est ainsi émis indique que ce qui suit à l'instant Tₛ contient un message de sélection des étiquettes électroniques pour l'écriture.
(c) Emettre, à partir de l'instant Tₛ, le message 54 de sélection des étiquettes électroniques pour l'écriture. Ce message est par exemple constitué de trois parties : une première 54₁ indiquant le rang ou adresse dans la mémoire 22 du premier chiffre binaire à comparer, une deuxième 54₂ indiquant le nombre n de chiffres binaires à comparer et une troisième 54₃ indiquant le nombre ou code binaire idendifiant les étiquettes à sélectionner et servant comme code de sélection.
(d) Comparer, dans les étiquettes électroniques, ce code identificateur 54₃ au code correspondant contenu dans la mémoire 22 de l'étiquette électronique, la place de ce code ayant été définie par les parties 54₁ et 54₂ du message 54.
(e) Mettre les étiquettes électroniques contenant ce code identificateur dans un état permettant l'écriture dans la mémoire du message suivant.
(f) Emettre, à l'instant Tₑ, par le dispositif de lecture/écriture, une commande ou instruction d'écriture 56 d'un message déterminé 58.
   La commande d'écriture 56 indique qu'il s'agit d'une instruction d'écriture et que cette écriture doit être effectuée dans une partie déterminée de la mémoire 22 définie, par exemple, par son adresse. Le message 58 peut être chiffré pour en assurer la protection contre les fraudes éventuelles.
   La commande d'écriture (56, 58) se termine par un code de fin 60.
(g) Ecrire le message 58 dans la mémoire 22 à l'endroit indiqué par la commande 56 dans les étiquettes sélectionnées par les étapes (d) et (e).

Selon d'autres caractéristiques de l'invention, l'étape (a) consiste en l'émission d'un champ électromagnétique non modulé ou en un arrêt d'émission du champ électromagnétique pendant une durée déterminée.

Dans le cas où l'étape (b) consiste à émettre des signaux de synchronisation des chiffres du message suivis de signaux de synchronisation des mots du message, le dernier signal de synchronisation à la fréquence des mots du message indique que le message suivant contient le code identificateur des étiquettes électroniques à sélectionner.

## Revendications

1. Procédé d'écriture simultanée d'un message commun dans des étiquettes électroniques sans contact à l'aide d'un dispositif de lecture/écriture émettant un champ électromagnétique modulé de fréquence porteuse (F₀) qui est détecté et démodulé par les étiquettes électroniques situées dans le champ électromagnétique, **caractérisé en ce qu'**il comprend les étapes suivantes consistant à :
(a) émettre, par le dispositif de lecture/écriture, un signal de remise à zéro (RAZ) pour provoquer le fonctionnement en réception des étiquettes électroniques,
(b) émettre, par le dispositif de lecture/écriture, des signaux de synchronisation pour permettre aux étiquettes électroniques de se synchroniser sur les signaux émis,
(c) émettre, par le dispositif de lecture/écriture, un code identifiant les étiquettes électroniques à sélectionner pour l'écriture simultanée,
(d) comparer, dans les étiquettes électroniques, ce code identificateur au code correspondant contenu dans la mémoire de l'étiquette électronique,
(e) mettre les étiquettes électroniques contenant ce code identificateur dans un état permettant l'écriture dans la mémoire,
(f) émettre, par le dispositif de lecture/écriture, une commande d'écriture d'un message déterminé,
(g) écrire le message déterminé dans les étiquettes électroniques sélectionnées par les étapes (d) et (e).

2. Procédé selon la revendication 1, **caractérisé en ce que** l'étape (a) consiste en l'émission d'un champ électromagnétique non modulé.

3. Procédé selon la revendication 1, **caractérisé en ce que** l'étape (a) consiste en un arrêt d'émission du champ électromagnétique pendant une durée déterminée.

4. Procédé selon la revendication 1, 2 ou 3, **caractérisé en ce que** l'étape (b) consiste à émettre des signaux de synchronisation des chiffres du message suivis de signaux de synchronisation des mots du message.

5. Procédé selon la revendication 4, **caractérisé en ce que** le dernier signal de synchronisation à la fréquence des mots du message indique que le message suivant contient le code identificateur des étiquettes électroniques à sélectionner.

6. Procédé selon l'une quelconque des revendications précédentes 1 à 5, **caractérisé en ce que** le message identificateur des étiquettes électroniques à sélectionner contient, outre ce code identificateur, le nombre de chiffres de ce code et le rang du premier chiffre de ce code dans la mémoire (22) de l'étiquette électronique.

## Patentansprüche

1. Verfahren zum gleichzeitigen Schreiben einer gemeinsamen Meldung in kontaktlosen elektronischen Etiketten mittels einer Lese-/Schreibvorrichtung, die ein trägerfrequenzmoduliertes elektromagnetisches Feld (F₀) abgibt, das von den sich im elektromagnetischen Feld befindlichen elektronischen Etiketten detektiert und demoduliert wird, **dadurch gekennzeichnet, dass** es die folgenden Etappen umfasst:
(a) Abgabe von der Lese-/Schreibvorrichtung eines Reset-Signals (RAZ), um die Empfangsfunktion der elektronischen Etiketten zu aktivieren,
(b) Abgabe von der Lese-/Schreibvorrichtung von Synchronisierungssignalen, um den elektronischen Etiketten zu ermöglichen, sich mit den abgegebenen Signalen zu synchronisieren,
(c) Abgabe von der Lese-/Schreibvorrichtung eines Codes, der die für das gleichzeitige Schreiben zu wählenden elektronischen Etiketten identifiziert,
(d) Vergleich in den elektronischen Etiketten dieses Identifikationscodes mit dem entsprechenden, im Speicher des elektronischen Etiketts enthaltenden Codes,
(e) Versetzung der diesen Identifikationscode enthaltenden elektronischen Etiketten in einen Zustand, der das Schreiben im Speicher gestattet,
(f) Abgabe von der Lese-/Schreibvorrichtung eines Schreibbefehls einer bestimmten Meldung,
(g) Schreiben der bestimmten Meldung in den bei den Etappen (d) und (e) ausgewählten elektronischen Etiketten.

2. Verfahren nach Anspruch 1, **dadurch gekennzeichnet, dass** die Etappe (a) in der Abgabe eines nicht modulierten elektromagnetischen Felds besteht.

3. Verfahren nach Anspruch 1, **dadurch gekennzeichnet, dass** die Etappe (a) in einer Abgabeunterbrechung des elektromagnetischen Felds während einer bestimmten Dauer besteht.

4. Verfahren nach Anspruch 1, 2 oder 3, **dadurch gekennzeichnet, dass** die Etappe (b) in der Abgabe von Synchronisierungssignalen der Zahlen der Meldung gefolgt von Synchronisierungssignalen der Worte der Meldung besteht.

5. Verfahren nach Anspruch 4, **dadurch gekennzeichnet, dass** das letzte Synchronisierungssignal mit der Frequenz der Worte der Meldung anzeigt, dass die nächste Meldung den Identifikationscode der auszuwählenden elektronischen Etiketten enthält.

6. Verfahren nach einem der vorgenannten Ansprüche 1 bis 5, **dadurch gekennzeichnet, dass** die Identifikationsmeldung der auszuwählenden elektronischen Etiketten außer diesem Identifikationscode die Anzahl der Zahlen dieses Codes und den Rang der ersten Zahl dieses Codes im Speicher (22) des elektronischen Etiketts enthält.

## Claims

1. A method for the simultaneous writing of a common message in contactless electronic labels by means of a read/write device emitting a modulated electromagnetic field with a carrier frequency (F₀) which is detected and demodulated by the electronic labels situated in the electromagnetic field, **characterised in that** it comprises the following steps consisting in:
(a) emitting, by means of the read/write device, a reset to zero signal (RAZ) for causing the electronic labels to function in reception mode,
(b) emitting, by means of the read/write device, synchronisation signals to enable the electronic labels to synchronise on the signals emitted,
(c) emitting, by means of the read/write device, a code identifying the electronic labels to be selected for the simultaneous writing,
(d) comparing, in the electronic labels, this identifier code with the corresponding code contained in the memory of the electronic label,
(e) putting the electronic labels containing this identifier code in a state permitting writing in the memory,
(f) emitting, by means of the read/write device, a command to write a given message,
(g) writing the given message in the electronic labels selected by means of steps (d) and (e).

2. A method according to Claim 1, **characterised in that** step (a) consists in emitting an unmodulated electromagnetic field.

3. A method according to Claim 1, **characterised in that** step (a) consists in stopping the emission of the electromagnetic field for a given period.

4. A method according to Claim 1, 2 or 3, **characterised in that** step (b) consists in emitting signals for synchronising the digits of the message followed by signals for synchronising the words of the message.

5. A method according to Claim 4, **characterised in that** the last synchronisation signal at the frequency of the words of the message indicates that the following message contains the identifier code for the electronic labels to be selected.

6. A method according to any one of the preceding Claims 1 to 5, **characterised in that** the identifier message for the electronic labels to be selected contains, in addition to this identifier code, the number of digits of this code and the rank of the first digit of this code in the memory (22) of the electronic label.
